# EUROPEAN PATENT SPECIFICATION

(11) **EP 1 504 212 B1**
(45) Date of publication and mention of the grant of the patent: **25.10.2006**
(21) Application number: 03718649.1
(22) Date of filing: 01.05.2003
(51) Int. Cl.: F16L 41/08, F16L 47/28

(54) **PIPE BRANCH SEAL COMPRISING A BUSHING WITH A WEDGE-SHAPED GROOVE AND A WEDGE FOR INSERTION IN GROOVE**
ROHRABZWEIGUNG MIT BUCHSE MIT EINER KEILFÖRMIGEN NUT UND KEIL ZUM EINFÜHREN IN DIE BUCHSE
JOINT POUR TRAVERSEE DE TUYAU, A MANCHON DOTE D'UNE RAINURE EN FORME DE COIN, ET COIN INTRODUIT DANS LA RAINURE

(30) Priority: 01.05.2002 DK 200200663
(43) Date of publication of application: 09.02.2005
(73) Proprietor: Vilhelmsen, Mogens, 9000 Aalborg (DK)
(72) Inventor: Vilhelmsen, Mogens, 9000 Aalborg (DK)
(74) Representative: Gregersen, Niels Henrik
(86) International application number: PCT/DK2003/000283
(87) International publication number: WO 2003/093719

(56) References cited:
- US-A- 1 192 927
- US-A- 3 548 079
- US-A- 3 973 783

## Description

### BACKGROUND OF THE INVENTION

The present invention concerns a lead-in of flexible material for tight-fitting leading in of items, preferably pipes or cables through a wall in a casing, including particularly circular, thin-walled and/or profiled pipes, and including a bushing for mounting in a hole in the casing, where the bushing has a foot that interacts with an internal wall of the casing, where the bushing furthermore includes means for expansion.

By such lead-ins in connection with drilling and tapping pipes, normally prescriptions are provided for allowable tolerances in the form of variations of the diameter for the hole in the drilled casing/pipe, the diameter of the inserted pipe, and the lead-in in the form of a sealing ring/packing of flexible material used for establishing sealing between the inserted pipe and the side in the established hole in the wall of the casing. Keeping the said tolerances implies that a lead-in is provided the expected degree of sealing.

By most of the known lead-ins, the used sealing ring/packing is double-acting, i.e. it serves for sealing between its own outer side and the side of the hole in which it is disposed as well as for sealing between its internal side and the pipe/item inserted in it, which further contributes to the great importance of keeping the above mentioned tolerances. However, there are thus no less than three conditions to observe at the establishing of a lead-in/drilling and tapping, namely the tolerances for the hole diameter, the diameter of the lead-in pipe, and the dimensions of the used sealing ring/packing, respectively. As the keeping of the above tolerances is furthermore handled at three different places, namely typically by the contractor establishing the hole (and besides, the work with establishing the lead-in as a whole), the manufacturer of the lead-in pipe, and the manufacturer of the sealing ring/packing, errors may easily arise, causing that the expected degree of sealing is not attained by the lead-in established, to the detriment of the builder.

However, there are a series of different alternatives attempting to improve the sealing between an item to be lead through a wall in an enclosure of which some are indicated below.

GB 2120340 concerns a pipe branch formed by an inner insert for internal abutment on the wall of the main pipe, where the inner insert has an internal thread interacting with an inner swivel nut which by screwing presses an external bushing for abutment against the outer side of the main pipe with the risk of deformation of the pipe wall, whereby leaks may occur.

Using a screw thread for joining may be disadvantageous if a pipe branch is to be made in an excavation where a thread may be exposed to dirt before screwing together. The screwing itself may be time-consuming and tedious if the space for operating tools is limited.

US 6,089,615 and US 5,957,505 also describe branching of pipes where a number of different bushings are used. Internal sealing against the inner wall of the main pipe is performed by two bushings that lie within each other. Inside the internal bushings there is a casing interacting with an external flange. The individual components are mutually secured by a locking ring.

The large number of components makes joining cumbersome, and in an excavation there is possibility of dirt coming between the different components.

US 2,924,472 indicate a sealing for use in a joint between a socket and a spigot of a pipe, including a sealing ring with an annular slot for receiving an annular, wedge-shaped item. The outer sides of the sealing ring includes projecting, annular lip sections, and driving the wedge-shaped body into the slot will cause the annular lip sections on the sealing ring to be pressed onto the inner side of the socket and the outer side of the spigot end inserted therein, respectively. The said joint is particularly well suited for establishing tight joints between spigot ends and sockets, as the driving of the wedge into the slot will cause good pressure between the annular lip sections and the internal side of the socket and the external side of the pipe inserted into the socket, respectively, but is not suited for used in drilling-tapping on pipes for connecting pipes, as the lip sections projecting from the sealing ring will cause possible occurrence of leaks between the tapped pipe and the rim of the hole drilled in the pipe wall due to the curvature of the pipe wall, causing uneven sealing by the presence of the lip sections.

US 3,548,079 indicate a wall lead-in for pipes, including parts interacting by screw thread and being disposed at each side of a lead-in bole in a wall element and screwed together, so that between the said interacting parts and the wall tightness is produced. The part of the two interacting parts projecting in against the cavity on the back side of the wall includes a tubular shrinking member that is shrunk on a pipe led into the cavity for providing tightness between the interacting parts and the pipe. The said joint is only suited for use in leading in pipes or the like through a plane rectilinear wall and may thus hardly be used with success in connection with leading in through curving walls, such as a pipe wall, as the two interacting main parts cannot fit tightly to a curving surface due to the fact that the parts are screwed together, which requires a plane abutment surface for providing the needed tightness.

US 3,973,783 relates to a pipe joint sealing device. The device includes an annular resilient body of rubber, which is generally V-shaped in cross-section, which defines inner and outer annular flanges or body portions. This annular body or rubber ring is fitted into the opening of a rigid concrete structure, such as a manhole, in fluid-type engagement therewith. This engagement is Interlocking which prevents the accidental dislodgement of the rubber ring from the opening, and is achieved by casting the concrete into locking engagement with the outer peripheral surface of the ring, this ring being provided with an annular anchor portion, which in cross-section is of keystone shape.

The pipe joint described above is for forming a man hole in a tube, but it is not for use in thin walled tubes simply because there is no room for placing the annular anchor portion in the wall. Also for in-situ use for connecting a branch to an existing tube the above-described pipe joint is not useable. It is not possible to form the annular anchor portion in the wall of a tube after a hole has been generated in the sidewall of the tube even the wall thickness is sufficient for forming the annular anchor portion simple because it will be impossible to form the annular anchor portion in the tube wall. A concrete component could be moulded into a whole in the tube wall but the concrete component has to be fixed and liquid concrete has to be kept in place during hardening where the period for hardening concrete will be several ours or days, which for in-situ connection is insufficient.

It is the purpose of the invention to provide a lead-in for pipes or cables through a wall in a casing, including particularly circular, thinwalled and/or profiled pipes, where the lead-in consists of few components, and where the lead-in is very simple to use at the same time, where the lead-in provides a tight, reliable and secure connection. Also, it is an object of the invention to enable increased tolerance between the lead-in and the interacting pipe.

This purpose it achieved by the bushing including an internal part for accommodating an item in the shape of pipes or cables, the internal part having an internal periphery that interact with the external periphery on an item in the form of pipes or cables inserted into it, and an external part where the external part has an external periphery that interacts with the hole, where the internal and the external parts are integrated in a foot, where between the parts a key slot is formed with the first internal side face, and a second opposite internal side face for interacting accommodation of a lock bushing that is inserted with axial orientation in the key slot whereby a relative radial displacement between the internal part and the external part of the bushing occurs, and where the lock bushing has retainer means at least at one of the sides that interact with retainer means on at least one of the internal side faces of the key slot for retaining the lock bushing in the key slot.

By using a lead-in including an external part and an internal part, respectively, integrated in a base part, and of which the external and internal peripheries, respectively, are interacting with the wall surface in the hole and the outer face of the lead-in item, it is hereby achieved that periphery of the external part by insertion into the lock bushing in the key slot is brought into tight-fitting contact with the hole in the wall in the enclosures/pipe, and where the internal part, with or without the action of the insertion of the lock bushing into the key slot provides sealing between its internal side and the outer side of the item. Hereby, the said sealings, besides the mutual integration at the base part, become independent of each other, whereby the hitherto existing tolerance limits are cancelled, simultaneously with achieving a lead-in with a tightness being more stable to transverse actions of force on the lead-in pipe and the lead-in itself.

A bushing may thus advantageously be disposed in a hole in the wall in a casing, after which an internal pipe may be mounted in the lock bushing which subsequently may be secured and expanded by a lock bushing being provided in the key slot by the relative radial displacement between the internal part and the external part. During the inserting, the bushing will be caused to expand in inwards direction as well as against the outer side of the item inserted in and passed into the internal part, and additionally there will occur an outwards expansion against the lateral limits of the hole in the wall of the enclosure/pipe in which the bushing has been inserted for achieving sealing between the outer wall of the inserted item and the wall of the enclosure. Hereby may be achieved a securing of the bushing and the item in the hole of the casing simultaneously with the pipe mounted inside the bushing may be secured efficiently in the bushing, and by the squeezing force achieved by driving the lock bushing into the slot there is achieved at the same time an efficient sealing between the inserted item and the internal part, and also an efficient sealing between the external part and the hole in the wall of the enclosure.

Furthermore, it is to be provided that the expansion of the internal and the external parts, respectively, may be adapted to each other by choosing a suitable combination of diameter and thickness and rigidity of the lock bushing. In its outermost consequence this means that the expansion directed towards the item inserted in the internal part by inserting the lock bushing may be reduced to zero simultaneously with achieving a considerable expansion of the external part, so that there is provided a relatively great expansion force between the external periphery of the external part and the facing hole surface of the hole in the wall. In some cases there may even be embodiments where a slot appears between the internal side of the lock bushing oriented towards the internal part and the facing side of the internal side of the lock bushing simultaneously with an effective sealing is attained, which is possible due to integration between the internal part and the external part in the base area. Hereby may be achieved a very efficient sealing of the lead-in simultaneously with larger tolerances than achieved by using prior art lead-ins.

However, usually it will so that by dimensioning an actual lead-in according to the invention, dimension and thickness of the lock bushing will be determined, ensuring a preferred contact pressure between the internal part and the item inserted therein, respectively, and correspondingly between the external periphery of the external part and the side faces of the hole in the wall of the enclosure.

Furthermore may be mentioned that there may be operated with different embodiments of the lead-in, where the internal part on the external periphery includes an annular recess for accommodating clamping means for providing efficient sealing between the item and the internal part. This embodiment will particularly be actual in cases where the diameter and thickness of the lock bushing is of such nature relative to the key slot that the expansion of the internal part becomes small or null. Other sealing means may be envisaged in use as substitution for the clamping means or as supplement for their effect, for providing an efficient sealing between the item and the internal part.

By using the lead-in according to the invention and by the presence of the sealing ring, the sealing becomes more stable towards transverse loads in the upper part of the sealing area compared with the degree of sealing that may be achieved by using the hitherto known bushings due to the sealing pressure between the internal part and the item/pipe inserted therein becomes independent of the sealing pressure between the external part and the sides of the hole in the wall of the enclosure in which the bushing according to the invention is inserted.

Furthermore, it is to be noted that when it is specified that the internal part has an internal periphery interacting with the external periphery on an item in the form of pipes or cables inserted in it, it is to be construed so that this may vary from including annular lips projecting inwards in the aperture, or just an approximately smooth surface depending on the nature of the surface of the item inserted in the internal part of the sealing, and according to which requirements between the item and the wall in the enclosure are to fulfil. The same is the case with the external section, where the external part has an external periphery that interact with the hole in the wall in the enclosure. Without this is to be viewed as limiting for the invention, it may thus be said that by practical experiment it has been found that the embodiment containing the most universal applications is an embodiment where the external periphery has a mainly even surface. In that connection is to be mentioned that the said surface can include lesser annular projections, the influence of which will not have any practical effect on the attainable tightness between the external periphery of the external part and the hole in the wall of the enclosure. The said lesser projections serve to retain the socket in its position during the driving of the lock bushing into the key slot between the internal and external parts of the bushing, as the projections during the initial insertion procedure of the lock bushing will be pressed against the walls of the hole, whereby an axial displacement of the socket in the insertion direction of the lock bushing will be prevented.

The lead-in according to the invention may advantageously be designed so that the lock bushing on at least one surface has projecting edges that interact with corresponding recesses in at least one of the side faces of the key slot. Hereby is achieved that the lock bushing after mounting may be retained in its position and may only be removed with difficulty, whereby the bushing may be secured in the selected position in a hole in a casing.

The lead-in may be further improved if the projecting edges and the corresponding recesses are designed with a first locking surface that form a steep or obtuse angle relative to the direction of insertion A of the lock bushing, the projections and recesses having a second surface that forms an acute angle relative to the direction of insertion A of the lock bushing. Hereby may be achieved an efficient securing of the lock bushing so that it may be removed only by destroying the bushing. Thus is achieved an almost optimal locking of the bushing in a hole in casing.

Advantageously, the bushing may contain internal and external grooves for marking shortening, and these grooves may possibly have a depth where breaking off straight away without using tools becomes a possibility. Hereby, a standard bushing with a relative great length may be shortened for the real application, e.g. in connection with leading in a body in a thin-walled pipe. Hereby is provided great flexibility with many applications of the bushing.

Also, the lock bushing may contain corresponding grooves for shortening. Hereby may be achieved the advantage that a lock bushing may be adapted for the actual use.

Advantageously, the bushing may contain internal means for sealing towards and fastening of items. Hereby may be achieved that e.g. a connected pipe may be fastened automatically, and that there may be achieved a sealing against the outer side of the pipe, e.g. in the form of internal lips in the bushing that may provide a very efficient sealing for liquid. The invention may thus be particularly suited for branching off on liquid-carrying pipelines.

Also, the bushing may contain means for sealing against the wall of the hole. Sealings may here be formed with lips seals that may be directed outwards. Another possibility may be to design the bushing with collar both internally and externally for sealing against the internal and external wall of the casing.

Advantageously, the invention may be designed so that the bushing has an internal part for accommodating items in the form of e.g. pipes, where the internal part at its outer side may contain a recess for accommodating a clamp. Hereby may be achieved that the bushing may be squeezed against an internal pipe whereby is achieved a further sealing. Hereby is achieved a further efficient retention of an internal item in the form of a pipe.

If the internal part is made of a suitably flexible material, it is also achieved that with the same dimension of the external part of the bushing becomes possible to perform connection to a number of different pipe dimensions in the internal part, which increases the field of application of the bushing in relation to dimensions, i.e. more universal possibilities of utilisation of the bushing according to the invention are achieved, and also good tolerances are attained which are useful in connection with transverse loads.

The bushing according to the invention may also be used together with tubular items with profiled external periphery, however, here it is a presupposition that the profilings in the sealing area interacting with the bushing are provided with the sealing elements associated with the actual pipe, or corresponding elements, for filling the said profilings.

The bushing may contain at least one embedded reinforcement. Hereby may be achieved an increased rigidity of the bushing, which advantageously may occur in the lower part of the bushing, where the bushing may be provided with a collar for stopping items that are inserted in the bushing. In this collar may advantageously be provided a reinforcement, and if the bushing is made by injection moulding of a rubber or plastic material, the plastic mould may beforehand, in connection with injection of fluid plastic, contain one or more reinforcements that are thus embedded in rubber or plastic. These reinforcements may be formed by metal rings, but one may just as well envisage a ring of carbon fibres or glass fibres for achieving reinforcement.

Advantageously, the bushing may be formed of a first, rigid, inwards facing material and a second, softer, outwards facing material. Hereby may be achieved that the stiffer, inwards facing material forms an efficient and stable sealing against an internally mounted item, e.g. a connecting pipe, simultaneously with the outwards facing, softer material forms a good and efficient sealing against e.g. a pipe wall in which the bushing has been mounted. The soft material may adapt to different irregularities that may arise by a possibly unsuitable breaking through of an enclosure. The bushing may advantageously be made by bicomponent moulding, where a first moulding may consist of moulding the inwards facing part of the bushing in a tool, after which a further moulding process may be performed, whereby the softer, outwards facing material is applied, and the bushing is finished. Of possible materials may be mentioned that the inwards facing material may be polymer, while the outwards facing softer material may be rubber, polymer and a co-polymer with corresponding properties.

Advantageously, the lead-in may be made so that at least one of the walls of the key slot contain at least one recess for accommodating at least one expansion element. Hereby may be achieved that when an expansion element has been inserted into the recess of the key slot, an outwards pressing force from the recess is produced, acting on the surrounding material where possible soft outwards facing material is deformed thereby, and if the recess has been formed in the bottom of the key slot, thereby will be formed a collar internally in an enclosure. Thereby is achieved a better retention and higher degree of sealing when using a lead-in according to the invention.

Advantageously, a lock bushing may contain at least one expansion element that may interact with at least one recess in the walls of the key slot. Hereby may be achieved that the expansion element is automatically mounted by inserting a lock bushing, where the key slot maybe distended relatively much during insertion of the lock bushing, but subsequently it will be the expansion elements, when reaching their correct position, that perform an outwards expansion of the bushing and thereby ensures a good sealing against surrounding material after prior calculation of sealing pressure.

With the purpose of ensuring good pressure and thereby good sealing between the hole in the wall and the external part of the bushing, e.g. in case that the hole sides are conical, the lock bushing may have wedge-shaped cross-section.

In certain cases, special demands are made to the properties of the flexible material of which the bushing is produced. As the said material is often not immediately identified, and the price for a lead-in made of a variety of said materials may vary greatly, as well as use of a bushing made of a wrong type of material may cause great expenses, e.g. for relieving contamination by inadvertent leaking from pipes and construction costs in connection with mending/replacing a wrongly selected bushing, it may be suitable that the lock bushing is made in different colours referring to the type or types of material, or combinations thereof, used for making the internal part and the external part, respectively, of the bushing. Hereby is achieved that by a colour table it will be very easy to identify the lead-in/bushing to be used for a given task, and furthermore, it will later be possible to identify such a lead-in in case it should be necessary to replace the same.

### DESCRIPTION OF THE DRAWING

In the following, the invention is explained with reference to the drawings, where:
- Figs. 1-10: show different embodiments of a lead-in according to the present invention,
- Fig. 11: show a further embodiment of a lead-in according to the invention, where the lead-in is used together with a socket pipe at the transition to a thin-walled pipe of significantly lesser dimension,
- Figs. 12 and 13: show examples of drill and tap on pipes where a lead-in according to the invention has been applied,
- Figs. 14-16: show different forms of pipes with which the lead-in according to the invention may advantageously be used by drilling and tapping pipes.

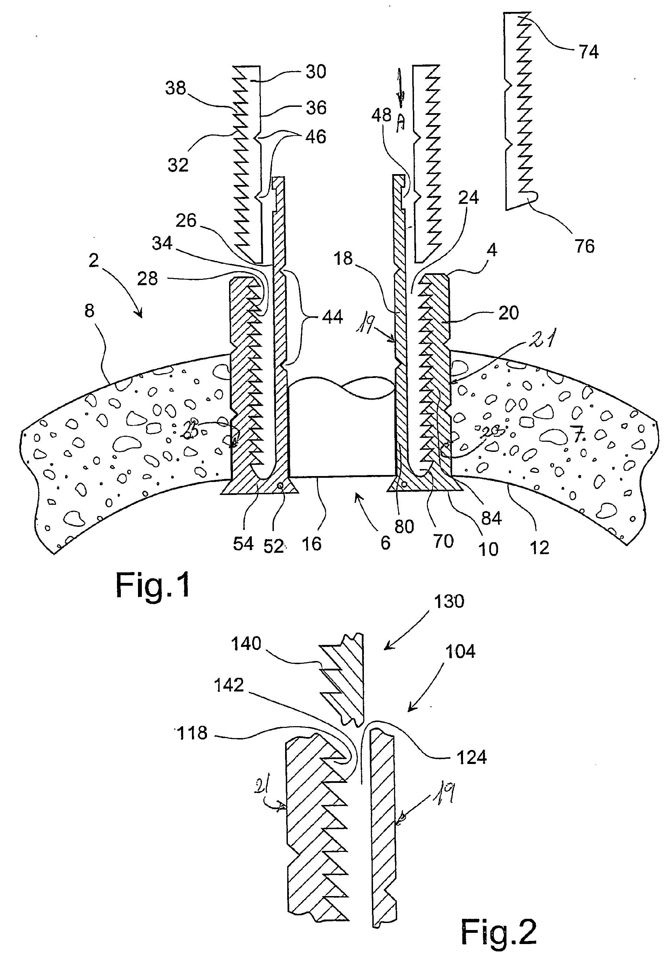

Fig. 1 shows an embodiment of the lead-in according to the present invention, where this is made as a pipe lead-in 2 consisting of a bushing 4 that is placed in a hole 6 in the wall 7 of a pipe 8, where the bushing 4 has an internal foot or base 10 that interacts with the inner wall 12 of the pipe. The bushing 4 consists of an internal part 18 and an external part 20. The internal part 18 and the external part 20 are interconnected with a foot 54. Between the internal part 18 and the external part 20 there is provided a key slot 24. The key slot 24 has a first internal side 26 and a second internal side 28. A lock bushing 30 has an external side 32 and an internal side face 36, where the lock bushing 30 may be wedge shaped or made as shown in Fig. 1. The external surface 32 of the lock bushing 30 is designed with projections 38 that interact with corresponding recesses 34 in the external side 28 of the key slot. The bushing 4 is made with shortening grooves 44 by which one may break off a part of the bushing 4, either by using tools or otherwise if the grooves 44 have sufficient depth, if the bushing is to be shortened and adapted to the actual mounting depth. Correspondingly, the lock bushing 30 contains grooves 46 for marking and aiding shortening, whereby the lock bushing also may be adjusted in length for the actual application. The internal periphery 19 of the internal part 18 may assume different embodiments as it will appear from the following, depending on the shape and nature of the item/pipe 16 to be accommodated in it for providing a satisfactory degree of sealing. The internal part 18 of the bushing 4 may furthermore, as shown, advantageously be designed with a recess 48 for accommodating a clamp. Hereby, a clamping of the external part 18 may be performed effectively about an item 16 that may be inserted.

The external periphery 21 of the external part 20 may assume different shapes, but it is preferred, as shown in all embodiments of the bushing 4 according to the invention that the periphery has an even, approximately smooth course, and, for making the lead-in better in maintaining tightness under the action of transverse loads, the external part 20 will typically be made of a flexible material of softer nature that the internal part 18.

Subsequently, a lock bushing 30 may be mounted in the key slot 24, where the bushing 30 is effectively brought in position in the key slot 24 by using e.g. a hammer. Hereby, the bushing 4 is expanded in inward direction as well, whereby a squeezing/pressing of the internal periphery 19 of the internal part 18 against e.g. the outer side of a pipe 16 disposed in the internal part 18 simultaneously with expansion occurring in outwards direction of the external part 20, so that its external side face 21 is pressed against the side face 23 of the hole 6 in the wall 7 of the pipe 8, whereby is provided a very efficient retention of the lead-in and sealing against the side face 23 of the hole 6 in the wall 7 in the pipe 8, and sealing between the external periphery of the pipe 16 inserted in the internal part 18 and the internal periphery 19 of the internal part 18. Using an internal part 18 sealing inwards against the pipe 16 and the external part 20 provides independent sealing in inwards and outwards direction. Thereby is achieved a very secure and very tight branching on e.g. pipes. On Fig. 1 is simultaneously shown an alternative embodiment for a lock bushing 74 that differ from lock bushing 30 by containing a foot 76 that can interact with a recess 70 at the bottom of the key slot 24. Hereby, the lowermost collar 10 may be pressed against the edge of the pipe 12, whereby increased sealing may be achieved.

The inserted pipe 16 may seal against the internal part 18, independently of the sealing provided between the external part 20 of the bushing 4 and the pipe 8, whereby a sealing pressure between part 20 and pipe 8 may be determined without regard to sealing against the internal pipe 16. Use of the lock bushing 30 furthermore provides a considerably more resistant sealing between the external side of the bushing and the sides of the hole 6 in the wall 7 in cases where the bushing 4 and the pipe 16 inserted therein are exposed to cress-axial load, which is often the case with drilling and tapping pipes located in earth, e.g. sewer pipes, where often a settling of the earth that is to support the pipe 15 inserted in the bushing occurs, implying increased transverse load on the lead-in, which often becomes leaky hereby at the side from which the transverse forces are acting on the lead-in, with the consequent risk of leaking in or out of liquid to/from the pipes.

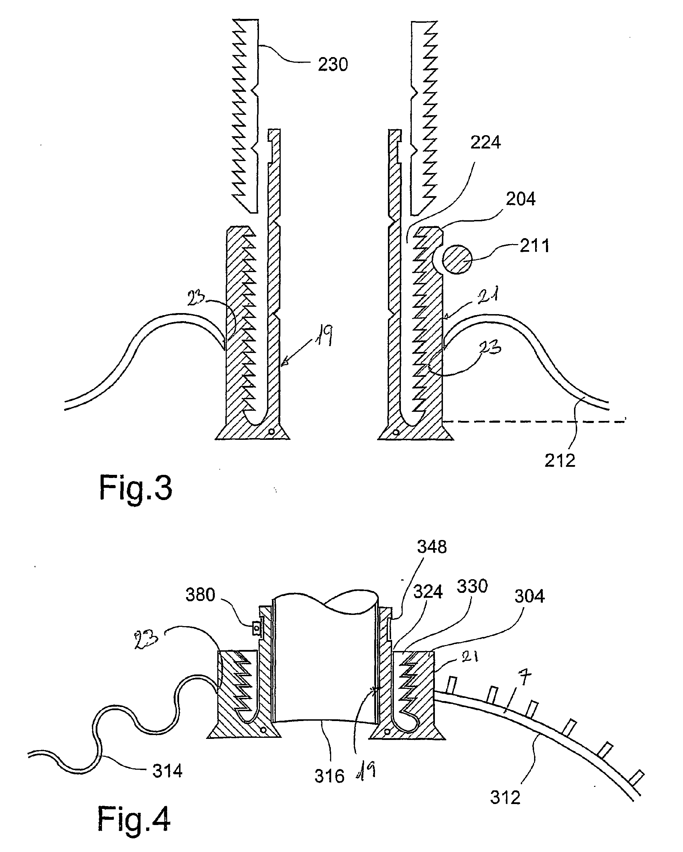

In a possible embodiment, lock bushing 30 may be designed with an internal diameter so that there is no abutment on the internal side 26 of the key slot 24. Hereby is achieved primarily sealing in the form of an outwards directed sealing pressure on the pipe 8. Sealing against the internal pipe 16 may be effected with a clamp 380 (Fig. 4), which is provided in the recess 48. Hereby, sealing against the internal pipe 16 and sealing against pipe 8 become two independent sealings that may be dimensioned without mutual influence. A mechanical action on pipe 16 may occur without influencing the sealing on pipe 8. Hereby is achieved a pipe branch that provide far greater security against leakages that the known pipe branches.

Fig. 2 shows an enlarged detail through a possible embodiment of bushing 104 and lock bushing 130. The bushing 130 is designed with inwards directed teeth 140, where the teeth 140 in upwards direction have an approximately horizontal face, while the teeth 140 in downwards direction have an inwards inclining face that continues into the next, approximately horizontal surface. The key slot 124 has teeth 142 in the internal wall 118, designed with an approximately horizontal downwards facing face and an inclining face for transition into the next horizontal downwards facing face. The surfaces 142 and 140 interact in the way whereby total securing of lock bushing 130 in the key slot 124 will occur. Supposing that the key slot 124 becomes narrower the deeper penetration into the slot, or that the lock wedge 130 expands with increasing distance from the bottom, an increasing clamping may be achieved as the lock wedge is pressed down. Hereby, the lock wedge will provide increasing resistance against pulling in, and an approximately optimal expansion of the bushing is ensured.

Fig. 3 shows the same invention as described under Figs. 1 and 2, but in connection with an alternative plastic pipe. A bushing 204 is inserted in a plastic pipe 212 which is surrounded by a metal reinforcement in the shape of a metal spiral, here shown in section as 211. A lock bushing 230 is shown here and may be inserted in a key slot 224, after which the bushing 204, as previously described, is expanded in outward as well as inward direction.

Fig. 4 shows an alternative embodiment of the bushing 304 which is here considerably shortened compared with the bushing shown on Figs. 1-3. The bushing 304 is shown placed in two different types of pipes: Pipe 314, a corrugated pipe, and pipe 312 is a plastic pipe with axially projecting reinforcements. A bushing 330 is disposed in a key slot 324 whereas a pipe 316 is disposed inside the bushing 304. An annular recess 348 contains a clamp 380 whereby by tightening the clamp 380 is attained a further squeezing force around the pipe 316.

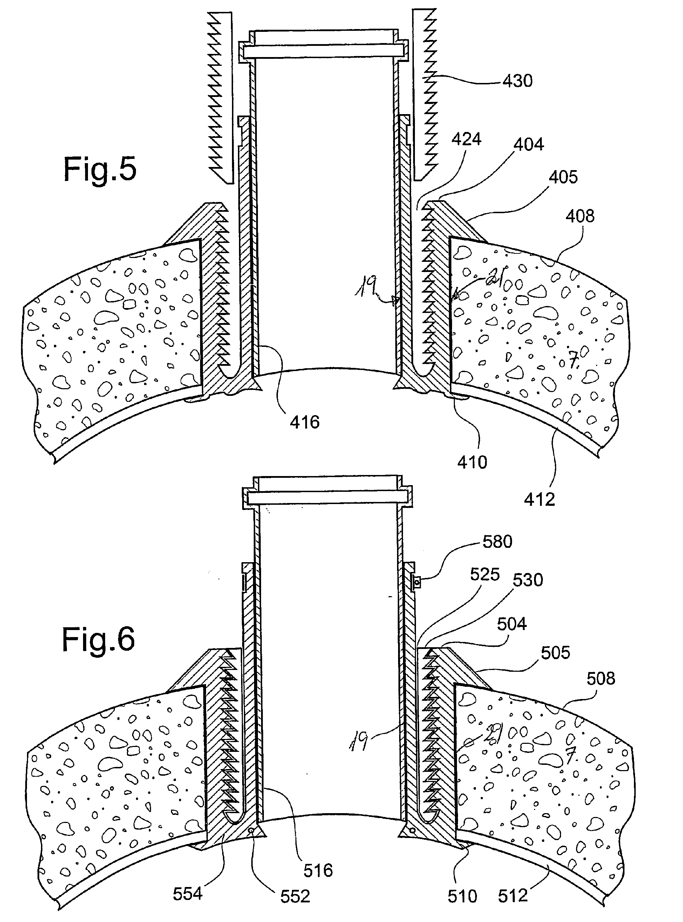

Fig. 5 shows an alternative embodiment of the invention, where a bushing 405 is provided in e.g. a concrete pipe 408, where this pipe is internally made with a plastic reinforcement 412, which may been provided by renovating of e.g. an old sewer pipe. The bushing 404 is designed with an external collar 405 that interacts with external surface of the pipe 408. Correspondingly, inside the pipe is provided a collar 410 interacting with the internal coating 412. A key slot 424 is shown, and also there is shown a lock bushing 430 which by mounting is to be pressed down in the key slot 424 in order thereby to perform expanding of the bushing 404 in outward and well as inward direction. Thus is attained squeezing force against an inwards mounted pipe 416.

Fig. 6 shows the same invention as Fig. 5 but with a lock bushing 530 disposed in a key slot 525, where the bushing 504 is provided with an external collar 505 and an internal collar 510, where the internal collar interacts with an internal plastic reinforcement 512 of the pipe 508. Inside the bushing 504 is mounted a pipe 516. A reinforcement ring 552 is shown in the base 554 of the bushing. Also, there is provided a clamp 580.

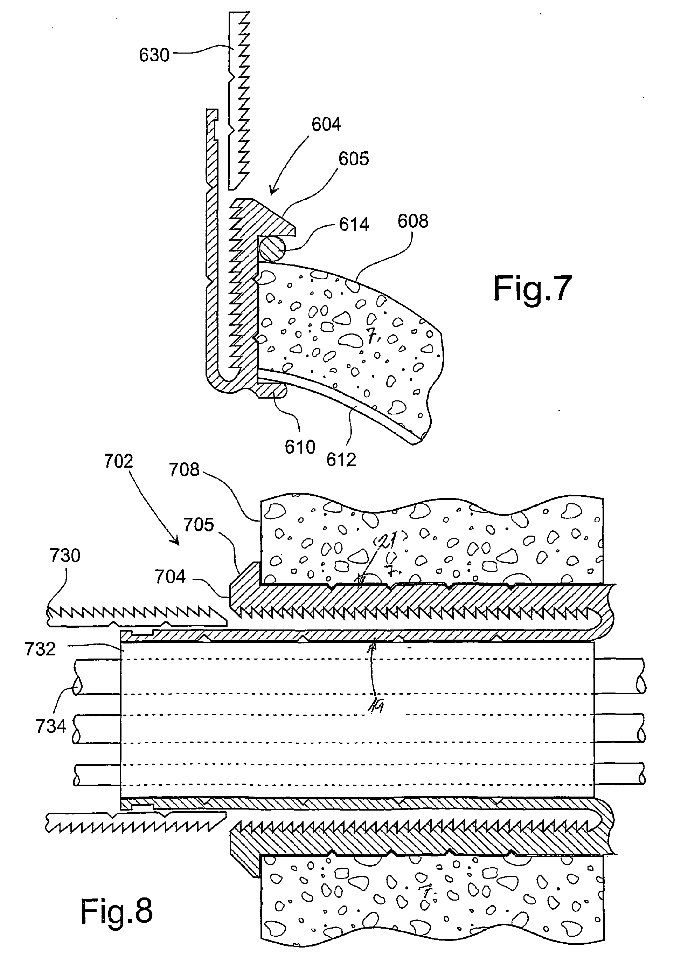

On Fig. 7 is shown an alternative embodiment of the invention, where a bushing 604 has been mounted in a pipe 608, where this pipe has an internal plastic reinforcement 612 that interacts with an internal collar 610 on the bushing 604. An annular sealing ring 614 is disposed under the collar 605 and the surface on the pipe 608. The annular sealing ring 614 may e.g. be a rubber ring provided inward pressure against the centre, and where the rubber ring is partly compressed, as the bushing 604 exerts a pressure with this collar 605 against the rubber ring which thereby attains greater sealing area against the collar 605 as well as against the pipe 608. Simultaneously may be achieved that the annular sealing ring 614 is compensating for material thickness variations in the pipe 608, which can occur with concrete pipes.

On Fig. 8 is shown a lead-in consisting of a bushing 704 which is used here for cable lead-in through a wall 708. The bushing 704 has a collar 705 for sealing against wall 708. The bushing 704 is largely identical with the bushings previously mentioned, and a wedge bushing 730 may be inserted in a key slot. Internally, the lead-in 702 contains a soft rubber material in which is running a number of cables 734. The soft material 732 will be squeezed in if the lock bushing 730 is squeezed in position in the key slot. Hereby is achieved a very tight cable lead-in that may be used in every place where cables are to be led in through e.g. an outer wall and into e.g. a living compartment. Simultaneously with very great tightness a large retaining force for the cables 734 is achieved, implying increased security in and around an electric installation.

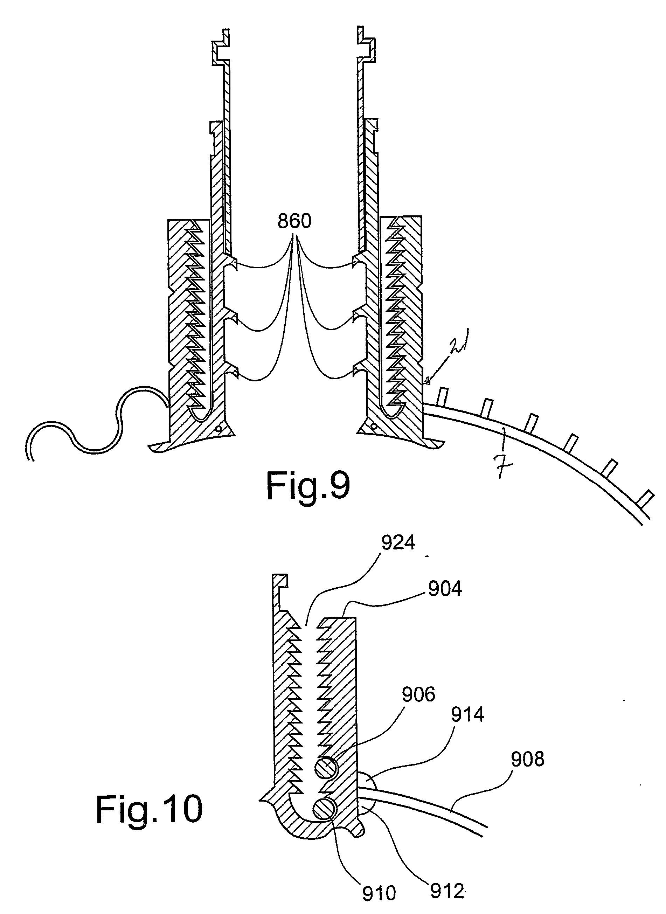

On Fig. 9 is shown an alternative embodiment of the invention as shown on Fig. 3, where the internal hole through a bushing is here designed with sealing elements 860 that form sealing against a pipe that possibly may be inserted. Hereby may be achieved a kind of lip seal as medium pressure from inside the pipe will act on individual lips 860 and exert pressure on these lips, whereby their force pressing against the inserted pipe is increased correspondingly, and a leakage through the first lip seal will automatically cause increased pressure on lip seal no. 2. The number of lips in the lip seal may far exceed the three shown here, so that a total sealing may be achieved even at very great pressure differences.

Fig. 10 shows an alternative embodiment. A key slot 924 contains teeth in both side walls, where the previous embodiments only have shown teeth in one side. Also, here is shown reinforcement elements 906 and 910 that lie in the bottom of the key slot 924 in recesses that just correspond to the sealing elements 906 and 910. These sealing elements 906 and 910 may consist of very rigid elements. It may e.g. be steel springs that are annular, exerting a pressure in outward direction against the bushing 904, whereby a pressure force over and under the pipe wall 908 ensures a good and stable sealing where a wedge bushing, by insertion into key slot 924 and with teeth interacting with the teeth of the key slot, will achieve complete securing of the bushing 904 and prevent the sealing elements 906 and 910 from leaving the key slot at any time.

On Fig. 10 is also shown an internal and external bulge 912 and 914 caused by an outwards directed pressure force caused by the sealing elements 906 and 910, where the the bulges 912 and 914 are further increased by inserting a lock wedge whereby further securing sealing relative to the pipe wall 908 may be achieved. With the invention as shown on Fig. 10, an extremely stable pipe lead-in may be achieved which is particularly suited for e.g. thin plastic tubes.

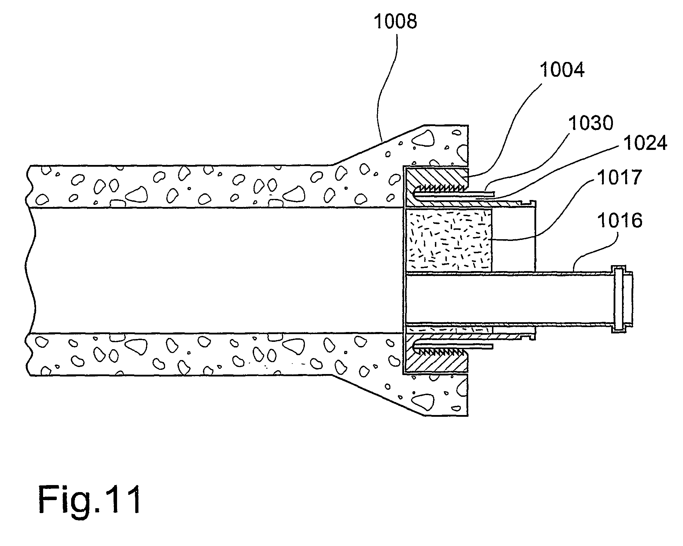

Fig. 11 shows an alternative application of a bushing 1004 disposed at the end of a pipe 1008 which is connected to a thinner pipe 1016 mounted in an insert 1017, which is mounted inside the bushing 1004. A key slot 1024 includes a lock wedge 1030, whereby the bushing 1004 is expanded both in inwards and outwards directions. An effective coupling to a pipe connection is hereby provided.

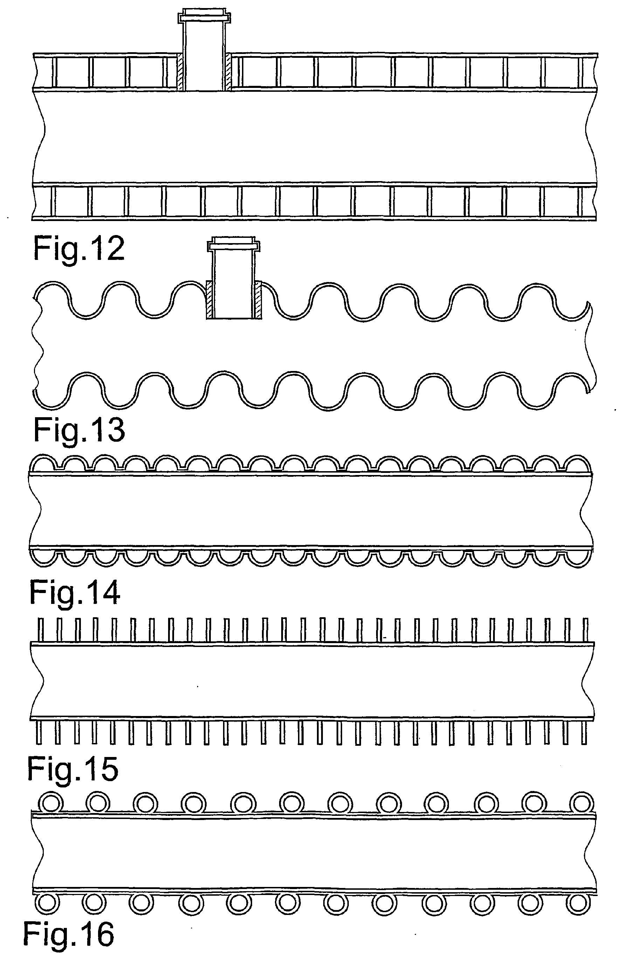

Figs. 12-16 show different embodiments of pipes where the invention advantageously may be used. It is here to be mentioned that the great increase of tolerances that may be achieved by the lead-in/bushing according to the invention imply that this may also be used in connection with drilling and tapping pipes having profiled external periphery; however, here it is a condition that the profilings in the sealing area interacting with the bushing are provided with the sealing elements associated with the actual pipe, or corresponding, for filling the said profilings.

The invention may advantageously be further developed to a four-edged version that may be used as combined cable lead-in and cable relief, and at the same time the invention may be used as a box in which cables may be joined, and switches or lamps may be mounted in the box.

## Claims

1. Lead-in (2) of flexible material for tight-fitting leading in of items, preferably pipes (16) or cables (734) through a wall (7) in a casing (8), including particularly circular, thin-walled and/or profiled pipes, and including a bushing (4) for mounting in a hole (6) in the casing (8), where the bushing (4) furthermore includes means for expansion, which bushing (4) includes an internal part (18) for accommodating an item in the shape of pipes (16, 316, 416, 516) or cables (734), which internal part (18) having an internal periphery (19) that interact with the external periphery on an item in the form of pipes (16, 316, 416, 516) or cables (734) inserted into it, and an external part (20) where the external part (20) has an external periphery (21) that interacts with the hole (6), , where between the parts (1.8, 20) a key slot (24) is formed with the first internal side face (26), and a second opposite internal side face (28) for interacting accommodation of a lock bushing (30) that is inserted with axial orientation in the key slot (24) whereby a relative radial displacement between the internal part (18) and the external part (20) of the bushing (4) occurs, and where the lock bushing (30) has retainer means (32) at least at one of the sides (36, 38) that interact with retainer means (34) on at least one of the internal side faces (26, 28) of the key slot (24) for retaining the lock bushing (30) in the key slot (24), **characterised in that** the internal (18) and the external (20) parts of the bushing (4) are integrated in a foot (10, 54), which foot (10, 54) interacts with an internal wall (12) of the casing (8).

2. Lead-in (2) according to claim 1, **characterised in that** the lock bushing (30) on at least one surface (36,38) has projecting edges (40) that interact with corresponding recesses (42) in at least one of the side faces (26, 28) of the key slot (24).

3. Lead-in (2) according to claim 1 or 2, **characterised in that** the projecting edges (40) and the corresponding recesses (42) have a first locking surface that form an obtuse angle relative to the direction of insertion A of the lock bushing (30), the projections (40) and recesses (42) having a second surface that forms an acute angle relative to the direction of insertion A of the lock bushing (30).

4. Lead-in (2) according to one of the claims 1-3, **characterised in that** the bushing (4) has internal and external grooves (44) for shortening.

5. Lead-in (2) according to one of the claims 1-4, **characterised in that** the lock bushing (30) has grooves (46) for shortening.

6. Lead-in (2) according to one of the claims 1-5, **characterised in that** the bushing (4) includes means (860) for sealing against and fastening of an item (16).

7. Lead-in (2) according to one of claims 1-6, **characterised in that** the bushing (4) includes means for sealing against the wall (22) of the bole (6).

8. Lead-in (2) according to one of claims 1 - 7, **characterised in that** the internal part (18) of the bushing for accommodating an item (16) is provided at its outer side with at least one recess (48) for accommodating a clamp.

9. Lead-in (2) according to one of claims 1 - 8, **characterised in that** the bushing (4) includes at least one embedded reinforcement (52).

10. Lead-in (2) according to one of claims 1 - 9, **characterised in that** the bushing (4) is formed by a first, rigid, inwards facing material (80) and a second, softer, outwards facing material (82).

11. Lead-in (2) according to one of claims 1-10, **characterised in that** at least one of the walls (18, 20) of the key slot (24) includes at least one recess (70) for accommodating at least one expansion element (76).

12. Lead-in (2) according to one of claims 1-11, **characterised in that** a lock bushing (74) includes at least one expansion element (76) that interacts with at least one recess (70) in the walls (18, 20) of the key slot (24).

13. Lead-in (2) according to any of claims 1 - 12, **characterised in that** the lock bushing (30) has wedge-shaped cross-section.

14. Lead-in (2) according to any of claims 1 - 13, **characterised in that** the lock bushing (30) is made with different colours referring to the type or types of material used for making the internal part (18) and the external part (20), respectively, of the bushing (4).

## Patentansprüche

1. Wanddurchführung (2) aus einem flexiblen Material für die dichte Durchführung von Elementen, vorzugsweise von Rohren (16) oder Kabeln (734) durch eine Wand (7) in einem Gehäuse (8), die insbesondere kreisförmige, dünnwandige und/oder profilierte Rohre umfassen, mit einer Buchse (4) für die Anbringung in einem Loch (6) im Gehäuse (8), wobei die Buchse (4) ferner Ausdehnungsmittel aufweist, wobei die Buchse (4) einen inneren Abschnitt (18) für die Aufnahme eines Elements in Form von Rohren (16, 316, 416, 516) oder Kabeln (734) besitzt, wobei der innere Abschnitt (18) einen inneren Umfang (19) besitzt, der mit dem äußeren Umfang eines Elements in Form von Rohren (16, 316, 416, 516) oder Kabeln (734), das in ihn eingesteckt ist, in Wechselwirkung steht, und einen äußeren Abschnitt (20) besitzt, wobei der äußere Abschnitt (20) einen äußeren Umfang (21) besitzt, der mit dem Loch (6) in Wechselwirkung steht, wobei zwischen den Abschnitten (18, 20) ein Keilschlitz (24) ausgebildet ist, der eine erste innere Seitenfläche (26) und eine zweite gegenüberliegende innere Seitenfläche (28) aufweist, um eine damit in Wechselwirkung stehende Verriegelungsbuchse (30), die mit axialer Orientierung in den Keilschlitz (24) eingeschoben ist, aufzunehmen, wodurch eine relative radiale Verlagerung zwischen dem inneren Abschnitt (18) und dem äußeren Abschnitt (20) der Buchse (4) erfolgt, wobei die Verriegelungsbuchse (30) Haltemittel (32) wenigstens an einer der Seiten (36, 38) besitzt, die mit Haltemitteln (34) an wenigstens einer der inneren Seitenflächen (26, 28) des Keilschlitzes (24) in Wechselwirkung stehen, um die Verriegelungsbuchse (30) in dem Keilschlitz (24) zu halten, **dadurch gekennzeichnet, dass** der innere Abschnitt (18) und der äußere Abschnitt (20) der Buchse (4) in einen Fuß (10, 54) integriert sind, der mit einer Innenwand (12) des Gehäuses (8) in Wechselwirkung steht.

2. Wanddurchführung (2) nach Anspruch 1, **dadurch gekennzeichnet, dass** die Verriegelungsbuchse (30) an wenigstens einer Oberfläche (36, 38) vorspringende Kanten (40) besitzt, die mit entsprechenden Aussparungen (42) in wenigstens einer der Seitenflächen (26, 28) des Keilschlitzes (24) in Wechselwirkung stehen.

3. Wanddurchführung (2) nach Anspruch 1 oder 2, **dadurch gekennzeichnet, dass** die vorstehenden Kanten (40) und die entsprechenden Aussparungen (42) eine erste Verriegelungsoberfläche besitzen, die mit der Einführungsrichtung (A) der Verriegelungsbuchse (30) einen stumpfen Winkel bildet, und die Vorsprünge (40) und Aussparungen (42) eine zweite Oberfläche besitzen, die mit der Einführungsrichtung (A) der Verriegelungsbuchse (30) einen spitzen Winkel bilden.

4. Wanddurchführung (2) nach einem der Ansprüche 1-3, **dadurch gekennzeichnet, dass** die Buchse (4) innere und äußere Nuten (44) für eine Verkürzung besitzt.

5. Wanddurchführung (2) nach einem der Ansprüche 1-4, **dadurch gekennzeichnet, dass** die Verriegelungsbuchse (30) Nuten (46) für eine Verkürzung besitzt.

6. Wanddurchführung (2) nach einem der Ansprüche 1-5, **dadurch gekennzeichnet, dass** die Buchse (4) Mittel (860) für eine Abdichtung an einem Element (16) und für dessen Befestigung aufweist.

7. Wanddurchführung (2) nach einem der Ansprüche 1-6, **dadurch gekennzeichnet, dass** die Buchse (4) Mittel (22) für eine Abdichtung gegen die Wand des Lochs (6) aufweist.

8. Wanddurchführung (2) nach einem der Ansprüche 1-7, **dadurch gekennzeichnet, dass** der innere Abschnitt (18) der Buchse für die Aufnahme eines Elements (16) an seiner Außenseite mit wenigstens einer Aussparung (48) für die Aufnahme einer Klemme versehen ist.

9. Wanddurchführung (2) nach einem der Ansprüche 1-8, **dadurch gekennzeichnet, dass** die Buchse (4) wenigstens eine eingebettete Verstärkung (52) aufweist.

10. Wanddurchführung (2) nach einem der Ansprüche 1-9, **dadurch gekennzeichnet, dass** die Buchse (4) durch ein erstes, starres, nach innen gewendetes Material (80) und ein zweites, weicheres, nach außen gewendetes Material (82) gebildet ist.

11. Wanddurchführung (2) nach einem der Ansprüche 1-10, **dadurch gekennzeichnet, dass** wenigstens eine der Wände (18, 20) des Keilschlitzes (24) wenigstens eine Aussparung (70) für die Aufnahme wenigstens eines Ausdehnungselements (76) aufweist.

12. Wanddurchführung (2) nach einem der Ansprüche 1-11, **dadurch gekennzeichnet, dass** eine Verriegelungsbuchse (74) wenigstens ein Ausdehnungselement (76) aufweist, das mit wenigstens einer Aussparung (70) in den Wänden (18, 20) des Keilschlitzes (24) in Wechselwirkung steht.

13. Wanddurchführung (2) nach einem der Ansprüche 1-12, **dadurch gekennzeichnet, dass** die Verriegelungsbuchse (30) einen keilförmigen Querschnitt hat.

14. Wanddurchführung (2) nach einem der Ansprüche 1-13, **dadurch gekennzeichnet, dass** die Verriegelungsbuchse (30) aus unterschiedlichen Farben hergestellt ist, die auf den oder die Materialtypen bezogen sind, die für die Herstellung des inneren Abschnitts (18) bzw, des äußeren Abschnitts (20) der Buchse (4) verwendet werden.

## Revendications

1. Entrée (2) de matériau flexible pour l'introduction ajustée d'articles, de préférence de tuyaux (16) ou de câbles (734) à travers une paroi (7) dans un boîtier (8), comprenant en particulier des tuyaux circulaires à paroi fine et/ou profilée, et comprenant une douille (4) pour le montage dans un trou (6) dans le boîtier (8) où la douille (4) comprend en outre des moyens pour l'expansion, laquelle douille (4) comprend une partie interne (18) pour loger un article de la forme des tuyaux (16, 316, 416, 516) ou des câbles (734), laquelle partie interne (18) ayant une périphérie interne (19) qui interagit avec la périphérie externe sur un article se présentant sous la forme de tuyaux (16, 316, 416, 516) ou de câbles (734) insérés dans celle-ci, et une partie externe (20) où la partie externe (20) a une périphérie externe (21) qui interagit avec le trou (6) où entre les parties (18, 20) une rainure de clavette (24) est formée avec la première face latérale interne (26), et une seconde face latérale interne opposée (28) pour la réception par interaction d'une douille de blocage (30) qui est insérée avec une orientation axiale dans la rainure de clavette (24) moyennant quoi un déplacement radial relatif entre la partie interne (18) et la partie externe (20) de la douille (4) a lieu, et où la douille de blocage (30) comprend des moyens de retenue (32) au moins au niveau de l'un des côtés (36, 38) qui interagissent avec des moyens de retenue (34) sur au moins l'une des faces latérales internes (26, 28) de la rainure de clavette (24) pour retenir la douille de blocage (30) dans la rainure de clavette (24), **caractérisée en ce que** les parties interne (18) et externe (20) de la douille (4) sont intégrées dans un pied (10, 54), lequel pied (10, 54) interagit avec une paroi interne (12) du boîtier (8).

2. Entrée (2) selon la revendication 1, **caractérisée en ce que** la douille de blocage (30) sur au moins une surface (36, 38) a des bords en saillie (40) qui interagissent avec des renfoncements (42) correspondants dans au moins l'une des faces latérales (26, 28) de la rainure de clavette (24).

3. Entrée (2) selon la revendication 1 ou 2, **caractérisée en ce que** les bords en saillie (40) et les renfoncements (42) correspondants ont une première surface de blocage qui forme un angle obtus par rapport à la direction d'insertion A de la douille de blocage (30), les saillies (40) et les renfoncements (42) ayant une seconde surface qui forme un angle aigu par rapport à la direction d'insertion A de la douille de blocage (30).

4. Entrée (2) selon l'une des revendications 1 à 3, **caractérisée en ce que** la douille (4) a des rainures interne et externe (44) pour le raccourcissement.

5. Entrée (2) selon l'une des revendications 1 à 4, **caractérisée en ce que** la douille de blocage (30) a des rainures (46) pour le raccourcissement.

6. Entrée (2) selon l'une des revendications 1 à 5, **caractérisée en ce que** la douille (4) comprend des moyens (860) pour réaliser l'étanchéité et la fixation un article (16).

7. Entrée (2) selon l'une des revendications 1 à 6, **caractérisée en ce que** la douille (4) comprend des moyens pour l'étanchéité contre la paroi (22) du trou (6).

8. Entrée (2) selon l'une des revendications 1 à 7, **caractérisée en ce que** la partie interne (18) de la douille pour recevoir un article (16) est prévue au niveau de son côté externe avec au moins un renfoncement (48) pour recevoir une pince.

9. Entrée (2) selon l'une des revendications 1 à 8, **caractérisée en ce que** la douille (4) comprend au moins un renfoncement encastré (52).

10. Entrée (2) selon l'une des revendications 1 à 9, **caractérisée en ce que** la douille (4) est formée par un premier matériau rigide orienté vers l'intérieur (80) et un second matériau plus souple orienté vers l'extérieur (82).

11. Entrée (2) selon l'une des revendications 1 à 10, **caractérisée en ce qu'**au moins l'une des parois (18, 20) de la rainure de clavette (24) comprend au moins un renfoncement (70) pour recevoir au moins un élément d'expansion (76).

12. Entrée (2) selon l'une des revendications 1 à 11, **caractérisée en ce qu'**une douille de blocage (74) comprend au moins un élément d'expansion (76) qui interagit avec au moins un renfoncement (70) dans les parois (18, 20) de la rainure de clavette (24).

13. Entrée (2) selon l'une quelconque des revendications 1 à 12, **caractérisée en ce que** la douille de blocage (30) a une section transversale en forme de cale.

14. Entrée (2) selon l'une quelconque des revendications 1 à 13, **caractérisée en ce que** la douille de blocage (30) est réalisée avec différentes couleurs désignant le type ou les types de matériaux utilisés pour fabriquer la partie interne (18) et la partie externe (20), respectivement de la douille (4)
